# FASCICULE DE BREVET EUROPEEN

(11) **EP 2 558 343 B1**
(45) Date de publication et mention de la délivrance du brevet: **02.04.2014**
(21) Numéro de dépôt: 11721340.5
(22) Date de dépôt: 15.04.2011
(51) Int. Cl.: B61B 12/00, B61B 12/10

(54) **PROCEDE ET INSTALLATION DE MISE SOUS TENSION D'UN CABLE**
VERFAHREN UND VORRICHTUNG ZUR SPANNUNG EINES KABELS
METHOD AND APPARATUS FOR TENSIONING A CABLE

(30) Priorité: 16.04.2010 FR 1001641
(43) Date de publication de la demande: 20.02.2013
(73) Titulaire: Pomagalski, 38340 Voreppe (FR)
(72) Inventeur: LAURENT, Jean-Claude, F-38500 Saint Nicolas de Macherin (FR); LEFORT, Mathieu, F-38500 Voiron (FR); LUCAS, Gregory, F-38120 Saint Egrève (FR)
(74) Mandataire: Novagraaf Technologies
(86) Numéro de dépôt international: PCT/FR2011/000228
(87) Numéro de publication internationale: WO 2011/128532

(56) Documents cités:
- EP-A1- 1 396 408
- EP-A2- 0 324 384

## Description

L'invention concerne une installation de mise sous tension d'un câble et un procédé de mise sous tension d'un câble.

L'invention concerne notamment le domaine des installations de transport par câble.

### ÉTAT DE LA TECHNIQUE

Dans une installation de transport par câble, la tension du câble doit être maintenue dans une plage donnée afin de garantir la sécurité de l'installation. Toutefois, le câble est soumis à de nombreuses conditions ayant une influence sur sa tension. En particulier, le chargement des véhicules a une influence considérable sur la tension du câble. De même, la température de fonctionnement de l'installation, qui peut varier entre plus de 25 °C l'été et moins de -30 °C l'hiver, influe de manière importante sur la tension du câble. Enfin, le câble subit également des déformations de fluage au cours du temps.

Aussi, il est nécessaire d'équiper les installations de transport par câble de station de tension permettant de maintenir la tension du câble dans une plage optimale quelles que soient les conditions de fonctionnement de l'installation.

Dans l'art antérieur, pour régler la tension du câble, une poulie sur laquelle passe le câble à tendre est montée sur un chariot ou lorry. Ce chariot est mobile sur un rail de guidage et on le déplace, au moyen d'un actionneur, vers la direction qui permet au câble de se détendre ou de s'allonger.

L'actionneur, un vérin par exemple, présente une extrémité montée fixe par rapport au rail de guidage et une autre extrémité montée sur le chariot de sorte à déplacer le chariot lors du déplacement du piston. Une telle réalisation est notamment décrite dans le document FR 2 661 147 au nom de la demanderesse. Une autre réalisation est décrite dans le document EP 0 324 384.

Toutefois, ce type d'installation de mise sous tension présente un encombrement longitudinal relativement important au regard de la course du chariot. En effet, compte tenu de la structure d'un vérin, sa course est généralement deux fois plus faible que son encombrement longitudinal lorsqu'il est déployé. Dès lors, le tronçon du rail sur lequel se déplace le chariot présente une longueur au moins deux fois moins importante que l'encombrement longitudinal de l'installation de mise sous tension. Ainsi, lorsque l'installation de mise sous tension du câble doit permettre d'absorber d'importantes variations de tension du câble, elle présente alors un encombrement considérable.

Aussi, ces stations de tension ne sont pas satisfaisantes pour des applications dans lesquelles l'espace disponible pour loger l'installation de mise sous tension est restreint.

### OBJET DE L'INVENTION

L'invention vise à remédier à ces problèmes en proposant un procédé de mise sous tension d'un câble et une station de mise sous tension présentant un encombrement restreint tout en permettant de maintenir la tension du câble dans une plage de fonctionnement donnée pour une gamme importante de variation des conditions de tension du câble.

A cet effet, et selon un premier aspect, l'invention propose un procédé de mise sous tension d'un câble au moyen d'une installation de mise sous tension comportant une poulie sur laquelle passe ledit câble, un chariot de support de ladite poulie mobile, sur un rail de guidage s'étendant selon un axe longitudinal, entre un premier et un second points extrêmes afin d'ajuster la tension du câble en fonction d'une consigne de tension du câble et un ou plusieurs actionneurs linéaires pour déplacer le chariot selon ledit axe longitudinal et
- un actionneur, dans une première position, entre un premier et un deuxième points d'appui fixes respectivement par rapport au rail et par rapport au chariot de sorte à permettre le déplacement du chariot sur un premier tronçon du rail s'étendant entre le premier point extrême et un point intermédiaire et de commander ledit actionneur en fonction de la consigne de tension du câble. Le procédé prévoit :
- de découpler l'actionneur de sa première position ;
- d'accoupler un actionneur, dans une seconde position, entre un troisième et un quatrième points d'appui fixes respectivement par rapport au rail et par rapport au chariot, au moins un des troisième et quatrième points d'appui étant distinct des premier et deuxième points d'appui de sorte à permettre le déplacement du chariot sur un second tronçon du rail s'étendant entre un point intermédiaire et un second point extrême et de commander ledit actionneur en fonction de la consigne de tension du câble.

Ainsi, selon l'invention, on prévoit au moins deux positions d'accouplement de l'actionneur définissant deux tronçons distincts de déplacement du chariot de telle sorte que la plage totale de déplacement du chariot est supérieure à la course de l'actionneur sans pour autant augmenter l'encombrement de l'installation de mise sous tension.

Avantageusement, le premier et le second tronçon se chevauchent dans une zone intermédiaire. Ainsi, cette superposition des deux tronçons de déplacement permet de limiter le nombre de changement de position de l'actionneur lorsque la consigne de position du chariot varie autour d'une zone intermédiaire du rail.

Avantageusement, l'on accouple un actionneur dans une première position lorsque l'effort exercé par l'actionneur correspondant à la consigne de tension du câble est atteint pour un positionnement du chariot entre le premier point extrême et la zone intermédiaire et l'on accouple un actionneur dans sa seconde position lorsque l'effort exercé par l'actionneur correspondant à la consigne de tension du câble est atteint pour un positionnement du chariot entre la zone intermédiaire et le second point extrême.

Dans un mode de réalisation de l'invention, le premier et le troisième points d'appui sont distincts et situés respectivement de part et d'autre d'un point central situé à mi-distance entre le premier et le second point extrême, l'actionneur exerçant sur le chariot un effort de traction dans l'une de ses première et seconde positions et un effort de poussée dans l'autre position.

De manière avantageuse, le deuxième et le quatrième points d'appui sont distincts et situés respectivement de part et d'autre d'un axe transversal médian du chariot.

Selon un deuxième aspect, l'invention concerne une installation de mise sous tension d'un câble comprenant :
- une poulie sur laquelle passe ledit câble ;
- un chariot de support de ladite poulie mobile, sur un rail de guidage s'étendant selon un axe longitudinal, entre un premier et un second points extrêmes afin d'ajuster la tension du câble ;
- un ou plusieurs actionneurs linéaires pour déplacer le chariot selon ledit axe longitudinal ;
- des moyens pour accoupler un actionneur entre un premier et un deuxième points d'appui fixes respectivement par rapport au rail et par rapport au chariot ; et
- des moyens pour accoupler un actionneur entre un troisième et un quatrième points d'appui fixes respectivement par rapport au rail et par rapport au chariot, au moins des troisième et quatrième points d'appui étant distinct des premier et deuxième points d'appui.

Dans un mode de réalisation, le premier et le troisième points d'appui sont distincts et situés respectivement de part et d'autre d'un point central situé à mi-distance entre le premier et le second point extrême.

Avantageusement, le deuxième et le quatrième points d'appui sont distincts et situés respectivement de part et d'autre d'un axe transversal médian du chariot.

Dans un mode de réalisation, l'actionneur est un vérin double effet. Ainsi, le même vérin peut être utilisé pour exercer un effort de traction et un effort de poussée sur le chariot.

En fin, selon un troisième aspect, l'invention concerne une installation de transport par câble dans lequel ledit câble s'étend en boucle fermée entre deux stations, au moins un véhicule tracté par le câble circulant entre les deux stations, l'installation de transport comportant une installation de mise sous tension du câble selon le second aspect de l'invention.

### BRÈVE DESCRIPTION DES FIGURES

D'autres objets et avantages de l'invention apparaîtront au cours de la description qui suit, faite en référence aux dessins annexés, dans lesquels :
- la figure 1 illustre une installation de mise sous tension du câble dans laquelle le chariot est situé à son premier point extrême et un actionneur est accouplé à l'installation dans une première position dans laquelle il permet le déplacement du chariot sur un premier tronçon, en exerçant un effort de traction sur ledit chariot ;
- la figure 2 illustre l'installation de la figure 1, dans laquelle l'actionneur est accouplé à l'installation dans sa première position, le chariot étant situé à l'extrémité du premier tronçon opposée au premier point extrême ;
- la figure 3 illustre l'installation de la figure 1 lors du changement de position de l'actionneur de sa première vers sa seconde position ;
- la figure 4 illustre l'installation de la figure 1 dans laquelle le chariot est situé à son second point extrême et un actionneur est accouplé à l'installation dans une seconde position dans laquelle il permet le déplacement du chariot sur un second tronçon, en exerçant un effort de poussée sur ledit chariot ;
- les figures 5 à 8 illustrent schématiquement une installation de mise sous tension lorsque l'actionneur est dans sa première position (figures 5 et 6) et lorsque l'actionneur est dans sa seconde position (figures 7 et 8).

### EXEMPLES DE RÉALISATION

L'invention concerne plus particulièrement le domaine des installations de transport par câble. Un telle installation comporte généralement au moins un câble 1 s'étendant en boucle fermée entre deux stations et un ou plusieurs véhicules tractés par ledit câble 1 et circulant entre les deux stations. Les véhicules peuvent être suspendus au câble 1 ou circuler sur des rails.

L'installation de transport par câble comporte une installation de mise sous tension du câble permettant d'ajuster la tension du câble 1 en fonction d'une consigne. La consigne est le plus souvent constituée d'une plage de tensions admissibles au regard des conditions de sécurité de l'installation.

Dans la description qui suit, les directions longitudinales, latérales et transversales sont définies par rapport à la direction de tension du câble 1.

L'installation de mise sous tension du câble comporte une poulie 2 sur laquelle passe le câble 1 que l'on veut tendre et un chariot 3 ou lorry de support de ladite poulie 2. La poulie 2 est montée en rotation sur ledit chariot 3 autour d'un axe A. Le chariot 3 est monté à coulissement sur un rail de guidage 4 s'étendant selon un axe longitudinal.

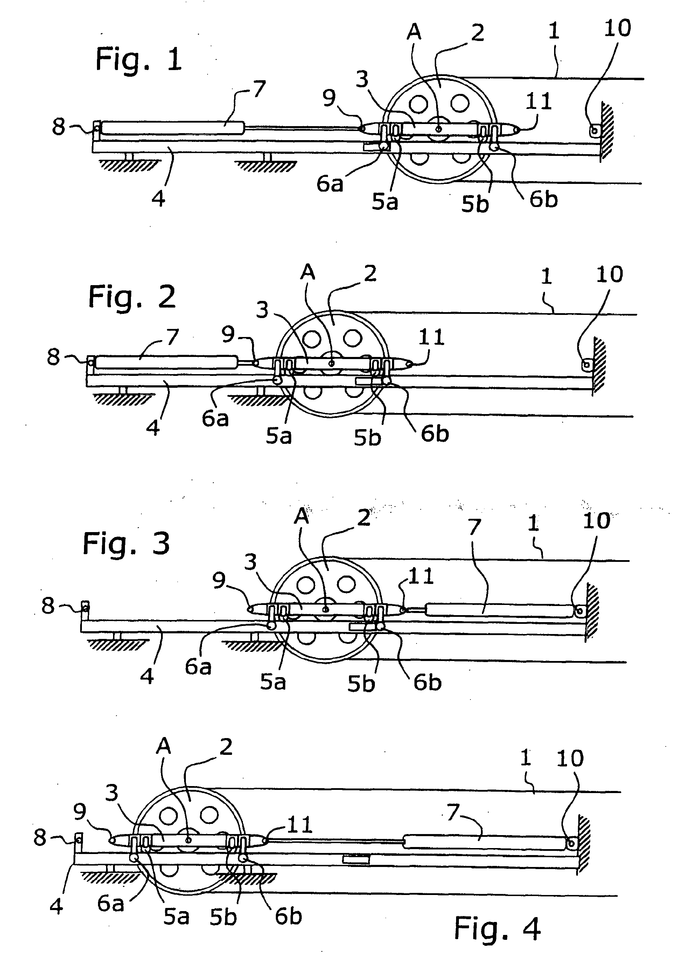

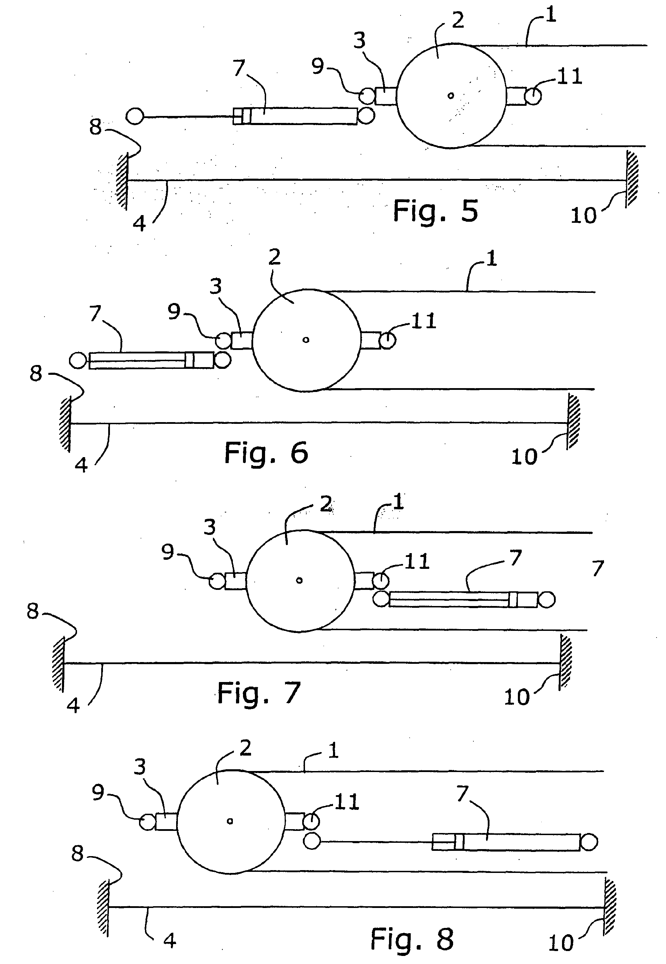

Le déplacement du chariot 3 le long du rail de guidage 4 entraîne une détente ou un allongement du câble 1 selon que le chariot 3 se déplace vers la ligne ou à l'opposé de la ligne. Sur les figures, un déplacement du chariot 3 vers la gauche entraîne une tension du câble 1 alors qu'un déplacement du chariot 3 vers la droite entraîne sa détente. Le chariot 3 est mobile entre un premier point extrême, position représentée sur les figures 1 et 5, et un second point extrême, position représentée sur les figures 4 et 8, définissant les deux extrémités de la plage de réglage disponible.

Le chariot 3 est guidé dans son déplacement sur le rail de guidage 4 par tout moyen approprié. Sur les figures 1 à 4, le chariot 3 est muni d'une première paire de galets 5a, 5b, assurant un guidage latéral et d'une seconde paire de galets 6a, 6b, assurant un guidage vertical du chariot 3.

L'installation comporte également un ou plusieurs actionneurs linéaires 7 permettant de déplacer le chariot 3. Typiquement, l'actionneur 7 comporte un corps et une tige montée mobile en translation par rapport audit corps. L'actionneur 7 est avantageusement un vérin double effet, c'est-à-dire qu'il est apte à exercer des efforts de traction ou de poussée sur le chariot 3. Le vérin peut notamment être un vérin hydraulique, électrique ou pneumatique raccordé à un circuit de commande comprenant des moyens de régulation permettant de maintenir une pression minimale dans le vérin de sorte que la tension du câble 1 soit conforme à la consigne de tension du câble 1.

Selon l'invention, un actionneur linéaire 7 peut être accouplé à l'installation selon au moins deux positions de travail différentes.

Dans une première position, représentée sur les figures 1, 2, 5 et 6, l'actionneur 7 est connecté d'une part à un premier point 8 d'appui, fixe par rapport au rail 4, et d'autre part à un second point 9 d'appui, solidaire du chariot 3. L'actionneur 7 peut ainsi déplacer le chariot sur un premier tronçon du rail 4 qui s'étend du premier point extrême jusqu'à une position intermédiaire.

Dans une seconde position, représentée sur les figures 3, 4, 7 et 8, l'actionneur 7 est connecté d'une part à un troisième point 10 d'appui fixe par rapport au rail 4, et d'autre part à un quatrième point 11 d'appui, solidaire du chariot 3. Au moins un des troisième 10 et quatrième point 11 d'appui est distinct des premier 8 et deuxième 9 points d'appui de sorte à permettre le déplacement du chariot 3 sur un second tronçon, distinct du premier tronçon. L'actionneur 7 peut ainsi déplacer le chariot sur un second tronçon du rail 4 qui s'étend d'une position intermédiaire jusqu'au second point extrême,.

Ainsi, le fait de prévoir deux positions d'accouplement de l'actionneur 7 permet de disposer d'une plage de déplacement du chariot 3 supérieure à la course de l'actionneur 7.

Dans le mode de réalisation représenté, l'installation comporte quatre point d'appuis 8, 9, 10, 11 distincts.

Le premier point 8 d'appui est solidaire du rail 4 et situé à une première extrémité du rail 4, opposée à la ligne. Le second point 9 d'appui est solidaire du chariot 3 et situé à une première extrémité du chariot 3, venant en vis-à-vis de la première extrémité du rail 4. Dans sa première position, lorsque l'actionneur 7 est accouplé entre le premier 8 et le second 9 points, il exerce un effort de traction sur le chariot 3 et permet de le déplacer sur un premier tronçon du rail 4 entre un premier point extrême, lorsque l'actionneur est intégralement déployé (voir figures 1 et 5) et un point intermédiaire, lorsque l'actionneur 7 est escamoté (voir figures 2 et 6).

Quand le chariot 3 atteint son point intermédiaire, lorsque la tige est complètement rentrée dans le corps de l'actionneur 7, il n'est plus possible d'augmenter davantage la tension du câble 1 en maintenant l'actionneur 7 accouplé dans sa première position. Aussi, il convient d'accoupler un actionneur 7 dans une seconde position de travail. Pour ce faire, il est envisagé, soit de découpler l'actionneur 7 de sa première position, puis de l'accoupler à l'installation dans la seconde position (voir figure 3) soit d'accoupler un second actionneur 7 à l'installation dans la seconde position de travail, avant de découpler le premier actionneur 7 de la première position.

Le troisième point 10 d'appui est solidaire du rail 4 et situé à une seconde extrémité du rail 4. Le quatrième point 11 d'appui est solidaire du chariot 3 et situé à une seconde extrémité du chariot 3, par rapport à un axe transversal médian du chariot 3, venant en vis-à-vis de la seconde extrémité du rail 4. Dans sa seconde position, lorsque l'actionneur 7 est accouplé entre le troisième 10 et le quatrième 11 points, il exerce un effort de poussée sur le chariot 3 et permet de le déplacer sur un second tronçon du rail 4 entre un point intermédiaire, lorsque l'actionneur 7 est escamoté (voir figure 7) et un second point extrême, lorsque l'actionneur 7 est déployé (voir figures 4 et 8).

On note que la distance entre le premier point 8 et le troisième point 10 est inférieure à la somme de la distance entre le second 9 et le quatrième 10 point et de deux fois la longueur de l'actionneur 7 déployé. Ainsi, le premier tronçon de déplacement du chariot 3 lorsque l'actionneur 7 est dans sa première position et le second tronçon de déplacement du chariot 3 lorsque l'actionneur 7 est dans sa seconde position se chevauchent sur une zone intermédiaire. Cette zone de chevauchement intermédiaire permet de disposer d'une plage de déplacement du chariot 3 pour laquelle l'actionneur 7 peut être accouplé soit dans sa première position, soit dans sa seconde position. Ainsi, lorsque la position du chariot 3 permettant d'obtenir la tension de consigne du câble 1 varie autour d'une position médiane entre les premier et second points extrêmes, il n'est pas nécessaire de changer la position de l'actionneur 7 de manière intempestive.

La position de l'actionneur 7 est déterminée en fonction de l'effort qu'il exerce pour un positionnement du chariot 3 sur le premier ou sur le second tronçon. Aussi, lorsque l'effort exercé par l'actionneur correspondant à la consigne de tension du câble est obtenu pour une position du chariot 3 entre le premier point extrême et la zone de chevauchement, l'actionneur est maintenu accouplé dans sa première position. Au contraire, lorsque l'effort exercé par l'actionneur correspondant à la consigne de tension du câble est obtenu pour un chariot 3 se situant entre le second point extrême et la zone de chevauchement, l'actionneur 7 est alors accouplé dans sa seconde position. Lorsque l'effort exercé par l'actionneur7 correspondant à la consigne de tension du câble est obtenu pour un chariot 3 se situant dans la zone de chevauchement, l'actionneur 7 peut être accouplé indifféremment dans sa première ou dans sa seconde position.

En pratique, lors de la mise en service de l'installation, l'actionneur 7 sera le plus souvent positionné dans sa première position et sera commandé de sorte à déplacer le chariot sur le premier tronçon en fonction des variations courantes de tension du câble. Puis, au cours du temps, le câble 1 subissant des déformations de fluage, il sera à un moment donné trop déformé pour pouvoir exercer la tension de consigne avec un actionneur accouplé en première position, on déplace alors l'actionneur dans sa seconde position.

Les moyens mécaniques pour accoupler l'actionneur 7 au rail, au niveau du premier 8 et du troisième point 10, ou au chariot 3, au niveau deuxième 9 et du quatrième 11 point peuvent être constitués de tous moyens appropriés. Dans le mode de réalisation représenté, ces moyens d'accouplement sont constitués d'un berceau composé de deux ailes présentant un alésage. Afin d'accoupler l'actionneur, les extrémités de l'actionneur qui présentent un anneau s'introduisent entre les ailes du berceau et un axe de type vis ou goupille est introduit à travers les alésages des ailes et l'anneau afin de solidariser l'actionneur au berceau

Ces moyens mécanique d'accouplement sont fixés au rail ou font saillies de part et d'autre du chariot.

Dans un second mode de réalisation non représenté, l'actionneur 7 reste fixé dans sa première et sa seconde position à un même point d'appui fixe par rapport au chariot 3 alors qu'il est fixé à un premier point fixe par rapport au rail dans une première position et à un troisième point fixe par rapport au rail dans une seconde position. En d'autres termes, le deuxième et le quatrième point d'appui sont identiques. Ainsi, dans ce mode de réalisation, l'actionneur peut être déplacé entre ses deux positions par découplage/couplage d'une seule des extrémités de l'actionneur.

Dans un troisième mode de réalisation, l'actionneur 7 reste fixé dans sa première et sa seconde position à un même point d'appui fixe par rapport au rail 4 En d'autres termes, le premier et le troisième points sont identiques.

On note que pour permettre la réalisation de ce second et troisième mode de réalisation, il conviendra de décaler latéralement l'axe du vérin par rapport à l'axe du rail.

Par ailleurs, il est également possible de prévoir des modes de réalisation de l'invention, dans lesquels l'actionneur 7 peut être disposé dans plus de deux positions différentes. Par exemple, l'actionneur 7 pourrait présenter quatre positions différentes. Pour le mode de réalisation représenté, l'actionneur 7 s'étendrait entre le premier point 8 et le deuxième point 9 d'appui, dans une première position, entre le premier point 8 et le quatrième point 11, dans une deuxième position, entre le troisième 10 et le deuxième point 9, dans une troisième position et entre le troisième 10 et le quatrième point 11 dans une quatrième position.

## Revendications

1. Procédé de mise sous tension d'un câble (1) au moyen d'une installation de mise sous tension comportant :
- une poulie (2) sur laquelle passe ledit câble (1),
- un chariot (3) de support de ladite poulie (2) mobile, sur un rail de guidage (4) s'étendant selon un axe longitudinal, entre un premier et un second points extrêmes afin d'ajuster la tension du câble (1) en fonction d'une consigne de tension du câble (1), et
- un ou plusieurs actionneurs linéaires (7) pour déplacer le chariot (3) selon ledit axe longitudinal, et
- un actionneur (7), dans une première position, entre un premier (8) et un deuxième (9) points d'appui fixes respectivement par rapport au rail (4) et par rapport au chariot (3) de sorte à permettre le déplacement du chariot (3) sur un premier tronçon du rail (4) s'étendant entre le premier point extrême et un point intermédiaire et de commander ledit actionneur (7) en fonction de la consigne de tension du câble (3) ; ledit procédé est **caractérisée en ce qu'**il prévoit :
- de découper l'actionneur (7) de sa première position ;
- d'accoupler un actionneur (7), dans une seconde position, entre un troisième (10) et un quatrième (11) points d'appui fixes respectivement par rapport au rail (4) et par rapport au chariot (3), au moins un des troisième (10) et quatrième (11) points d'appui étant distinct des premier (8) et deuxième (9) points d'appui de sorte à permettre le déplacement du chariot (3) sur un second tronçon du rail (4) s'étendant entre un point intermédiaire et un second point extrême et de commander ledit actionneur (7) en fonction de la consigne de tension du câble (3).

2. Procédé de mise sous tension d'un câble selon la revendication 1, **caractérisé en ce que** le premier et le second tronçon se chevauchent dans une zone intermédiaire.

3. Procédé de mise sous tension d'un câble selon la revendication 2, **caractérisé en ce que** l'on accouple un actionneur (7) dans une première position lorsque l'effort exercé par l'actionneur (7) correspondant à la consigne de tension du câble est atteint pour un positionnement du chariot (3) entre le premier point extrême et la zone intermédiaire et l'on accouple un actionneur (7) dans sa seconde position lorsque l'effort exercé par l'actionneur (7) correspondant à la consigne de tension du câble est atteint pour un positionnement du chariot (3) entre la zone intermédiaire et le second point extrême.

4. Procédé de mise sous tension d'un câble selon l'une quelconque des revendications 1 à 3, le premier (8) et le troisième (10) points d'appui sont distincts et situés respectivement de part et d'autre d'un point central situé à mi-distance entre le premier et le second point extrême, l'actionneur (7) exerçant sur le chariot (3) un effort de traction dans l'une de ses première et seconde positions et un effort de poussée dans l'autre position.

5. Procédé de mise sous tension d'un câble selon l'une quelconque des revendications 1 à 4, **caractérisé en ce que** le deuxième (9) et le quatrième (11) points d'appui sont distincts et situés respectivement de part et d'autre d'un axe transversal médian du chariot.

6. Installation de mise sous tension d'un câble comprenant :
- une poulie (2) sur laquelle passe ledit câble (1) ;
- un chariot (3) de support de ladite poulie (2) mobile, sur un rail de guidage (4) s'étendant selon un axe longitudinal, entre un premier et un second points extrêmes afin d'ajuster la tension du câble ;
- un ou plusieurs actionneurs linéaires (7) pour déplacer le chariot (3) selon ledit axe longitudinal ;
- des moyens pour accoupler un actionneur entre un premier (8) et un deuxième (9) points d'appui fixes respectivement par rapport au rail (4) et par rapport au chariot (3) ;
ladite installation étant **caractérisée en ce qu'**elle comprend en outre des moyens pour accoupler un actionneur entre un troisième (10) et un quatrième (11) points d'appui fixes respectivement par rapport au rail (4) et par rapport au chariot (3), au moins des troisième (10) et un quatrième (11) points d'appui étant distinct des premier (8) et deuxième (9) points d'appui.

7. Installation de mise sous tension d'un câble selon la revendication 6, **caractérisée en ce que** le premier (8) et le troisième (10) points d'appui sont distincts et situés respectivement de part et d'autre d'un point central situé à mi-distance entre le premier et le second point extrême.

8. Installation de mise sous tension d'un câble selon la revendication 6 ou 7, **caractérisée en ce que** le deuxième (9) et le quatrième (11) points d'appui sont distincts et situés respectivement de part et d'autre d'un axe transversal médian du chariot (3).

9. Installation de mise sous tension d'un câble selon l'une des revendications 6 à 8, **caractérisée en ce que** l'actionneur (7) est un vérin double effet.

10. Installation de transport par câble dans lequel ledit câble (1) s'étend en boucle fermée entre deux stations, au moins un véhicule tracté par le câble (1) circulant entre les deux stations, **caractérisée en ce qu'**elle comporte une installation de mise sous tension du câble selon l'une des revendications 6 à 9.

## Patentansprüche

1. Verfahren zur Spannung eines Kabels (1) mit Hilfe einer Anlage zur Spannung, umfassend:
- eine Riemenscheibe (2), auf der das Kabel (1) verläuft,
- einen Trägerwagen (3) der mobilen Riemenscheibe (2) auf einer Führungsschiene (4), die sich entlang einer Längsachse erstreckt, zwischen einem ersten und einem zweiten Endpunkt, um die Spannung des Kabels (1) je nach einem Spannungs-Vorgabewert des Kabels (1) einzustellen, und
- einen oder mehrer lineare Aktuatoren (7), um den Wagen (3) entlang der Längsachse zu verschieben, und
- einen Aktuator (7) in einer ersten Position, zwischen einem ersten (8) bzw. einem zweiten (9) festen Auflagepunkt mit Bezug auf die Schiene (4) und mit Bezug auf den Wagen (3), um die Verschiebung des Wagens (3) auf einem ersten Abschnitt der Schiene (4) zu ermöglichen, der sich zwischen dem ersten Endpunkt und einem Zwischenpunkt erstreckt, und den Aktuator (7) je nach dem Spannungs-Vorgabewert des Kabels (3) zu steuern ; wobei das Verfahnen **dadurch gekennzeichnet, dass** es erfandert
- den Aktuator (7) von seiner ersten Position zu entkoppeln;
- einen Aktuator (7) in einer zweiten Position, zwischen einem dritten (10) bzw. einem vierten (11) festen Auflagepunkt mit Bezug auf die Schiene (4) und mit Bezug auf den Wagen (3) zu koppeln, wobei mindestens einer des dritten (10) und vierten (11) Auflagepunkts verschieden vom ersten (8) und vom zweiten (9) Auflagepunkt ist, um die Verschiebung des Wagens (3) auf einem zweiten Abschnitt der Schiene (4) zu ermöglichen, der sich zwischen einem Zwischenpunkt und einem zweiten Endpunkt erstreckt und den Aktuator (7) je nach dem Spannungs-Vorgabewert des Kabels (3) zu steuern.

2. Verfahren zur Spannung eines Kabels nach Anspruch 1, **dadurch gekennzeichnet, dass** der erste und der zweite Abschnitt sich in einem Zwischenbereich überlappen.

3. Verfahren zur Spannung eines Kabels nach Anspruch 2, **dadurch gekennzeichnet, dass** ein Aktuator (7) in einer ersten Position gekoppelt wird, wenn die Kraft, die vom Aktuator (7) ausgeübt wird, die dem Spannungs-Vorgabewert des Kabels entspricht, für eine Positionierung des Wagens (3) zwischen dem ersten Endpunkt und dem Zwischenbereich erreicht wird, und ein Aktuator (7) in seiner zweiten Position gekoppelt wird, wenn die Kraft, die vom Aktuator (7) ausgeübt wird, die dem Spannungs-Vorgabewert des Kabels entspricht, für eine Positionierung des Wagens (3) zwischen dem Zwischenbereich und dem zweiten Endpunkt erreicht wird,

4. Verfahren zur Spannung eines Kabels nach einem der Ansprüche 1 bis 3,wobei der erste (8) und der dritte (10) Auflagepunkt verschieden sind und sich jeweils auf beiden Seiten eines zentralen Punkts befinden, der sich auf halbem Weg zwischen dem ersten und dem zweiten Endpunkt befindet, wobei der Aktuator (7) auf den Wagen (3) eine Zugkraft in einer seiner ersten und zweiten Position ausübt, und eine Schubkraft in der anderen Position.

5. Verfahren zur Spannung eines Kabels nach einem der Ansprüche 1 bis 4, **dadurch gekennzeichnet, dass** der zweite (9) und der vierte (11) Auflagepunkt verschieden sind und sich jeweils auf beiden Seiten der mittleren Querachse des Wagens befinden.

6. Anlage zur Spannung eines Kabels, umfassend:
- eine Riemenscheibe (2), auf der das Kabel (1) verläuft,
- einen Trägerwagen (3) der mobilen Riemenscheibe (2) auf einer Führungsschiene (4), die sich entlang einer Längsachse erstreckt, zwischen einem ersten und einem zweiten Endpunkt, um die Spannung des Kabels einzustellen;
- einen oder mehrere lineare Aktuatoren (7), um den Wagen (3) entlang der Längsachse zu verschieben;
- Mittel, um einen Aktuator zwischen einem ersten (8) bzw. einem zweiten (9) festen Auflagepunkt mit Bezug auf die Schiene (4) und mit Bezug auf den Wagen (3) zu koppeln,
wobei die Anlage **dadurch gekennzeichnet ist, dass** sie außerdem Mittel umfasst, um einen Aktuator zwischen einem dritten (10) bzw. einem vierten (11) festen Auflagepunkt mit Bezug auf die Schiene (4) und mit Bezug auf den Wagen (3) zu koppeln, wobei mindestens eine dritter (10) und ein vierter (11) Auflagepunkt verschieden vom ersten (8) und vom zweiten (9) Auflagepunkt ist.

7. Anlage zur Spannung eines Kabels nach Anspruch 6, **dadurch gekennzeichnet, dass** der erste (8) und der dritte (10) Auflagepunkt verschieden sind und sich jeweils auf beiden Seiten eines zentralen Punkts befinden, der sich auf halbem Weg zwischen dem ersten und dem zweiten Endpunkt befindet.

8. Anlage zur Spannung eines Kabels nach Anspruch 6 oder 7, **dadurch gekennzeichnet, dass** der zweite (9) und der vierte (11) Auflagepunkt verschieden sind und sich jeweils auf beiden Seiten einer mittleren Querachse des Wagens (3) befinden.

9. Anlage zur Spannung eines Kabels nach einem der Ansprüche 6 bis 8, **dadurch gekennzeichnet, dass** der Aktuator (7) ein doppelt wirkender Zylinder ist.

10. Anlage zum Transport durch ein Kabel, wobei sich das Kabel (1) in geschlossener Schleife zwischen zwei Stationen erstreckt, wobei mindestens ein Fahrzeug, das vom Kabel (1) gezogen wird, zwischen den zwei Stationen verkehrt, **dadurch gekennzeichnet, dass** sie eine Anlage zur Spannung des Kabels nach einem der Ansprüche 6 bis 9 umfasst.

## Claims

1. Method for tensioning a cable (1) using a tensioning installation comprising:
- a pulley (2) over which said cable (1) passes,
- a support trolley (3) for said mobile pulley (2), on a guide rail (4) running along a longitudinal axis between first and second extreme points so as to adjust the tension of the cable (1) as a function of the set tension of the cable (1), and
- one or several linear actuators (7) to move the trolley (3) along said longitudinal axis, and:
- an actuator (7), in a first position, between a first support point (8) fixed relative to the rail (4) and a second support point (9) fixed relative to the trolley (3) such that the trolley (3) moves on a first segment of the rail (4) extending between the first extreme point and an intermediate point and said actuator (7) is controlled as a function of the set tension of the cable (3);
Said method is **characterized in that** it requires:
- decoupling the actuator (7) from its first position;
- coupling an actuator (7), in a second position, between a third support point (10) fixed relative to the rail (4) and a fourth support point (11) fixed relative to the trolley (3), at least one of the third support point (10) and the fourth support point (11) being distinct from the first support point (8) and the second support point (9) such that the trolley (3) moves on a second segment of the rail (4) running between an intermediate point and a second extreme point and said actuator (7) is controlled as a function of the set tension of the cable (3).

2. Method for tensioning a cable according to claim 1, **characterised in that** the first and second segments overlap in an intermediate zone.

3. Method for tensioning a cable according to claim 2, **characterised in that** an actuator (7) is coupled in a first position when the force applied by the actuator (7) corresponding to the set tension of the cable is reached for a position of the trolley (3) between the first extreme point and the intermediate zone and an actuator (7) is coupled in its second position when the force applied by the actuator (7) corresponding to the set tension of the cable is reached for a position of the trolley (3) between the intermediate zone and the second extreme point.

4. Method for tensioning a cable according to any of claims 1 to 3, the first (8) and third (10) support points are distinct and are located on each side of a central point half way between the first and the second extreme points, the actuator (7) applying a tension force on the trolley (3) in its first or its second position, and a thrust force in the other position.

5. Method for tensioning a cable according to any one of claims 1 to 4, **characterised in that** the second (9) and fourth (11) support points are distinct and are located on each side of a median transverse axis of the trolley.

6. Cable tensioning installation comprising:
- a pulley (2) over which said cable (1) passes;
- a support trolley (3) for said mobile pulley (2), on a guide rail (4) running along a longitudinal axis between first and second extreme points so as to adjust the cable tension;
- one or several linear actuators (7) to move the trolley (3) along said longitudinal axis;
- means of coupling an actuator between a first support point (8) fixed relative to the rail (4) and a second support point (9) fixed relative to the trolley (3);
said installation being **characterised in that** it also comprises means of coupling an actuator between a third support point (10) fixed relative to the rail (4) and a fourth support point (11) fixed relative to the trolley (3), at least the third (10) and the fourth (11) support points being distinct from the first (8) and second (9) support points.

7. Cable tensioning installation according to claim 6, **characterised in that** the first (8) and the third (10) support points are distinct and are respectively located on each side of a central point half way between the first and the second extreme points.

8. Cable tensioning installation according to claim 6 or 7, **characterised in that** the second (9) and fourth (11) support points are distinct and are respectively located on each side of a median transverse axis of the trolley (3) .

9. Cable tensioning installation according to one of claims 6 to 8, **characterised in that** the actuator (7) is a double acting jack.

10. Cable transport installation in which said cable (1) forms a closed loop between two stations, at least one vehicle drawn by the cable (1) running between the two stations, **characterised in that** it comprises a cable tensioning installation according to one of claims 6 to 9.
